# EUROPÄISCHE PATENTSCHRIFT

(11) **EP 0 764 580 B1**
(45) Veröffentlichungstag und Bekanntmachung des Hinweises auf die Patenterteilung: **09.02.2000**
(21) Anmeldenummer: 95115011.9
(22) Anmeldetag: 23.09.1995
(51) Int. Cl.: B65B 9/20, B65B 51/30

(54) **Schlauchbeutelmaschine**
Machine for making tubular bags
Machine de fabrication de sachets tubulaires

(43) Veröffentlichungstag der Anmeldung: 26.03.1997
(73) Patentinhaber: Rovema Verpackungsmaschinen GmbH, 35463 Fernwald (DE)
(72) Erfinder: Kammler, Roman Richard, Dr., D-67547 Worms (DE); Baur, Walter, Dr., D-63584 Gründau (DE)

(56) Entgegenhaltungen:
- EP-A- 0 255 474
- EP-A- 0 276 628
- EP-A- 0 678 450
- WO-A-86/04559
- DE-A- 2 743 314
- DE-A- 4 206 968
- FR-A- 2 409 149
- US-A- 3 256 673
- US-A- 4 768 327

## Beschreibung

Die Erfindung betrifft eine Schlauchbeutelmaschine zur Herstellung, Befüllung und Verschweißung von Schlauchbeuteln.

Es sind sowohl kontinuierlich als auch getaktet arbeitende Schlauchbeutelmaschinen bekannt. Bei den kontinuierlich arbeitenden Schlauchbeutelmaschinen erfolgt der Schlauchtransport kontinuierlich ohne Stillstand und die Beutelverschweißung geschieht bei bewegtem Folienschlauch. Bei den getaktet arbeitenden Schlauchbeutelmaschinen erfolgt die Beutelquerverschweißung bei stehendem Folienschlauch. Die Beutellängsverschweißung kann bei stehendem oder bei bewegtem Folienschlauch erfolgen.

Die Beutelquerverschweißung erfolgt mittels Einrichtungen zum Verschweißen der Beutelquernähte, zum Beispiel mittels Heißsiegelbacken oder Impulsbacken. Diese Einrichtungen werden bei den Schlauchbeutelmaschinen mit getakteter Arbeitsweise lediglich senkrecht zum Folienschlauch bewegt. Bei vertikalen Schlauchbeutelmaschinen mit kontinuierlicher Arbeitsweise werden die Einrichtungen zum Verschweißen der Beutelquemähte entlang vorgegebener Bahnen von einem tiefer liegenden Schweißort zu einem höher liegenden Schweißort an den Folienschlauch bewegt, um sich mit dem Folienschlauch nach unten zu bewegen und dabei den Verschweißvorgang auszuführen. Die Bahnkurven beschreiben, je nach mechanischer Konstruktion, während ihrer Bewegung nach oben einen Teil einer Kreisbahn oder eines Rechtecks.

Bei einer aus der EP-OS 0 255 474 bekannten Schlauchbeutelmaschine gemäß dem Oberbegriff des Anspruchs 1 werden Schweißbacken mittels eines Motors und einer herkömmlichen Baugruppe verschoben. Die Baugruppe ist zudem mittels einer Zahnstange parallel zur Folientransportrichtung verschiebbar.

Der Erfindung liegt die Aufgabe zugrunde, eine Schlauchbeutelmaschine zu schaffen, bei der die Beutelquerverschweißung ortsgenau wahlweise in kontinuierlicher oder in getakteter Arbeitsweise erfolgen kann, und die auch für eine Kombination aus diesen Arbeitsweisen, den diskontinuierlichen Betrieb, geeignet ist. Zudem sollen die Bahnen der Einrichtungen zum Verschweißen der Beutelquernähte ohne Montageaufwand veränderbar sein.

Gelöst ist die Aufgabe gemäß dem kennzeichnenden Teil des Anspruchs 1.

Bei der vorgeschlagenen Schlauchbeutelmaschine sind die Einrichtungen zum Verschweißen der Beutelquernähte sowohl mittels eines Motors senkrecht zur Bewegungsrichtung des Schlauches verschiebbar, als auch mittels eines weiteren Motors parallel zur Bewegungsrichtung des Schlauches verschiebbar, und die Motoren werden über eine Rechnereinheit jeweils separat angesteuert. Infolge der frei über eine Rechnereinheit wählbaren Motorparameter können die Einrichtungen zum Verschweißen der Beutelquemähte in allen gewünschten Geometrien von Bahnkurven während des Betriebs der Schlauchbeutelmaschine bewegt werden. Wird zum Beispiel der Motor für die Verschiebung der Einrichtungen parallel zur Bewegungsrichtung des Schlauches zum Verschweißen der Beutelquernähte nicht betrieben, so kann allein durch eine Ansteuerung des Motors für die Verschiebung senkrecht zur Bewegungsrichtung des Schlauches eine Verschweißung der Beutelquemähte in getakteter Arbeitsweise erfolgen.

Für eine kontinuierliche Arbeitsweise werden die Motoren zum Beispiel derart angesteuert, daß sie die Einrichtungen zum Verschweißen der Beutelquernähte auf z. B. Ellipsenbahnen aus einer unteren Schweißposition wieder in eine obere Schweißposition bringen, wobei gegebenenfalls kurze Stillstandszeiten des Schlauchtransports (diskontinuierliche Arbeitsweise) berücksichtigt werden.

Die Verpackungsgeschwindigkeiten sind relativ hoch, da die Bahnlängen der Einrichtungen zum Verschweißen der Beutelquernähte minimiert werden. Von der Rechnereinheit werden minimale Bahnlängen, Horizontalhübe oder Vertikalhübe vorgegeben. Zum Beispiel kann bei einer relativ geringen Beuteldicke der Horizontalhub einer vertikalen Schlauchbeutelmaschine der Einrichtungen zum Verschweißen der Beutelquernähte vergleichsweise kurz sein.

Eine Bahnveränderung mit oder ohne Veränderung des Schwerpunktes einer Bahn ist allein durch die Wahl eines Steuerprogrammes möglich. Ein Steuerprogramm gibt alle Raumpunkte einer Bahnkurve vor, zudem alle Geschwindigkeiten in x-Richtung und y-Richtung, sowie die Beschleunigungswerte in diese Richtungen. Die Steuerprogramme, aber auch einzelne Bahnparameter können von einem Anwender in die Rechnereinheit eingegeben werden. Zu einer Veränderung der Bahnkurven ist kein Montageaufwand nötig.

Die wählbaren Parameter für die Bahnkurven haben des weiteren die Vorteile, daß größere Siegelwege und Siegelzeiten einstellbar sind, und daß auch starr mit den Einrichtungen zum Verschweißen der Beutelquernähte verbundene Zusatzeinrichtungen auf vorgewählten Bahnen bewegt werden können. Die erfindungsgemäße Schlauchbeutelmaschine hat zudem einen geringeren Schallpegel als herkömmliche Schlauchbeutelmaschinen.

Die Motordrehzahl und die Anzahl der Motorumdrehungen führen zu horizontalen oder vertikalen Geschwindigkeitskomponenten und Wegstrecken der Einrichtungen zur Verschweißung der Beutelquemähte.

Da die Einrichtung zum Verschweißen der Beutelquernähte über eine senkrecht zur Bewegungsrichtung des Schlauches verschiebende Mechanik verschiebbar mit einer parallel zur Bewegungsrichtung des Schlauches verschiebenden Mechanik verbunden ist, so erfolgt eine Überlagerung der einen Auslenkung und Geschwindigkeit dieser Einrichtungen mit der anderen Auslenkung und Geschwindigkeit derart, daß mechanische Bauteile für die eine Bewegung in die andere Richtung verschoben werden. Zum Beispiel wird eine verschiebende Mechanik für eine Horizontalbewegung direkt auf dem verschiebbaren Bauteil einer verschiebenden Mechanik für eine Vertikalbewegung montiert, oder aber die verschiebende Mechanik für die Vertikalbewegung wird direkt auf dem verschiebbaren Bauteil der verschiebenden Mechanik für die Horizontalbewegung montiert. Dadurch wird eine besonders kompakte Bauweise erreicht.

Eine bestimmte Motordrehzahl und Anzahl an Motorumdrehungen führt linear zu einer gewünschten Geschwindigkeitskomponente und Wegstrecke, da die die Einrichtung zum Verschweißen der Beutelquernähte verschiebende Mechanik eine vom Motor angetriebene Lineareinheit ist. Diese Lineareinheit enthält einen von einem Servomotor über ein Zahnrad angetriebenen Zahnriemen, der mit einem Befestigungsteil verbunden ist. Somit kann eine auf dem Befestigungsteil montierte, in eine Richtung verschiebende Mechanik vom Zahnriemen zusätzlich in eine dazu orthogonale Richtung verschoben werden.

Zwei Einrichtungen zum Verschweißen der Beutelquernähte können direkt über die Lineareinheit gegenläufig angetrieben werden, da an den gegenläufig bewegten, geraden Abschnitten eines Zahnriemens jeweils ein Befestigungsteil vorgesehen ist, das mit dem Zahnriemen verbunden ist. So kann je eine Einrichtung zum Verschweißen der Beutelquernähte starr mit einem Befestigungsteil verbunden werden. Die beiden Einrichtungen führen dann stets eine gegenläufige Bewegung aus, deren Bewegungsstrecke, momentane Geschwindigkeit und momentane Beschleunigung jeweils den gleichen Betrag haben.

Die bewegte Masse an einer Einrichtung zur Verschweißung der Beutelquernähte ist reduziert, wenn der Motor nicht starr mit der verschiebenden Mechanik verbunden ist, sondern gemäß Anspruch 4 feststeht und mittels eines Zahnriemens die bewegliche Lineareinheit antreibt. Zur Vermeidung einer unzureichenden Zahnriemenspannung, wie sie sich ergibt, wenn der Abstand zwischen dem feststehenden Motor und dem bewegten Zahnrad, zu dem der Zahnriemen führt, verändert wird, kann analog Anspruch 5 ein Riemenstraffer vorgesehen werden. In einer zuverlässigen, wenig aufwendigen Ausführungsform kann der Riemenstraffer aus zwei Rädern bestehen, die jeweils mittels einer Feder gegen den Zahnriemen vorgespannt sind, und die auf der äußeren Riemenfläche, gegenüber liegend abrollen (Anspruch 6).

Anstatt eine Lineareinheit mit zwei Befestigungsteilen auszustatten, kann gemäß Anspruch 7 in einer stabileren Ausführungsform eine Doppellineareinheit vorgesehen werden, bei der jede der beiden Lineareinheiten über jeweils ein Befestigungsteil mit jeweils einer Einrichtung zum Verschweißen der Beutelquernähte mechanisch verbunden ist. Als Einrichtung zum Verschweißen ist eine Schweißbacke vorgesehen.

Zur Verhinderung zu starker Beanspruchungen an den für die Bewegungen der Einrichtungen zum Verschweißen der Beutelquernähte beteiligten Bauteile, kann man die verschiebende Mechanik (Anspruch 8 und Anspruch 9) mittels mindestens einer Federung abfedern. Dabei kann die Federung in der Lineareinheit integriert sein (Anspruch 10).

Die Leistung der Schlauchbeutelmaschine kann noch dahingehend erhöht werden, daß die Schlauchbeutelmaschine eine Doppelschlauchbeutelmaschine ist (Anspruch 11).

Der Vorteil der erfindungsgemäßen Schlauchbeutelmaschine, daß die Einrichtungen zum Verschweißen der Beutelquernähte auf genau vorgegebenen Bahnkurven bewegt werden können, läßt sich auch für Zusatzaggregate im Bereich dieser Einrichtungen nutzen, wenn diese Zusatzaggregate starr mit dieser Einrichtung verbunden sind. Dieser Vorteil ist besonders groß bei den Zusatzaggregaten Produktabstreifer (Anspruch 12) und Kühlluftauslaß (Anspruch 13), die zumindest eine ähnliche Bahnkurve beschreiben sollten wie diese Einrichtungen. Dabei ist eine besonders kompakte Bauweise erreicht, wenn gemäß Anspruch 14 der Kühlluftauslaß in den Produktabstreifer integriert ist.

Die Einrichtungen zum Verschweißen der Beutelquernähte können auf Bahnen bewegt werden, die während einer Bewegung zum Schlauch zueinander parallelen Geraden entsprechen, und die in einer Ellipsenbahn geschlossen sind, deren Ellipsendurchmesser senkrecht zum Schlauch kleiner ist als der Ellipsendurchmesser in Richtung parallel zum Schlauch. Dadurch wird erreicht, daß einerseits die Einrichtungen zum Verschweißen der Beutelquernähte während des Schweißvorganges entlang der Geraden optimalen Kontakt mit dem zu verschweißenden Folienmaterial haben, und daß andererseits diese Einrichtungen auf einen relativ kurzen Weg wieder zurück in eine Schweißposition bewegt werden. Mit der Ellipsenbahn ist es auch möglich, eine insgesamt im mathematischen Sinn stetige Bahn zu bilden, auch an den Übergangsstellen von der Geradenbahn zu der Ellipsenbahn. Diese Bahnen sind besonders für das kontinuierliche Schweißverfahren und das teilkontinuierliche Schweißverfahren geeignet. Beim getakteten Verfahren dagegen werden die Einrichtungen zum Verschweißen der Beutelquemähte nur in Richtung senkrecht zum Schlauch betrieben.

Bei allen Schweißverfahren kann die Geschwindigkeit abhängig vom Beuteltyp für das Verschweißen der Beutelquemähte noch dadurch gesteigert werden, daß die Wegdistanz senkrecht zur Bewegungsrichtung des Schlauches der Einrichtungen abhängig von der Dicke der erzeugten Beutel vorgegeben wird. So ist es zum Beispiel vorteilhaft, bei dicken Klotzbodenbeuteln eine größere Wegdistanz vorzusehen als bei einfachen flachen Schlauchbeuteln.

Es kann zum Beispiel für eine vertikale Schlauchbeutelmaschine eine Abstreiffunktion realisiert werden, bei der das in den Schlauch fallende Füllgut mittels eines mit der Einrichtung zum Verschweißen der Beutelquernähte verbundenen Produktabstreifers über die Folie nach unten gestreift wird, indem die Bahnkurven entsprechend gewählt werden. Dazu werden unmittelbar vor einem Querschweißvorgang die Einrichtungen parallel zum Schlauch und ohne Berührungskontakt zum Schlauch nach unten bewegt, wobei sie eine größere Relativgeschwindigkeit als der Folienschlauch haben, und mittels eines mit der Einrichtung verbundenen Produktabstreifers über den Folienschlauch streifen. Diese Funktion kann unabhängig von der Arbeitsweise der Schlauchbeutelmaschine im getakteten, teilkontinuierlichen oder kontinuierlichen Verfahren benutzt werden.

Eine Nahtkühlung mittels gegen die Beutelquernaht geblasener Kühlluft kann bei einer vertikalen Schlauchbeutelmaschine erfolgen, wenn nach einem Querschweißvorgang die Einrichtungen zum Verschweißen der Beutelquernähte parallel zum Schlauch ohne Berührungskontakt zum Folienschlauch positioniert werden, dabei die gleiche Relativgeschwindigkeit - die auch den Wert Null haben kann - wie der Folienschlauch haben, und mittels eines mit der Einrichtung verbundenen Kühlluftauslasses die Schweißnaht gekühlt wird. Auch diese Funktion ist unabhängig von der Arbeitsweise der Schlauchbeutelmaschine.

Im folgenden wird die Erfindung anhand von Ausführungsbeispiele darstellenden Figuren weiter beschrieben. Es zeigt:
- Figur 1: in einer Seitenansicht eine vertikal verschiebende Mechanik mit einer verschiebbar mit dieser verbundenen horizontal verschiebenen Mechanik, sowie fest mit der horizontal verschiebenden Mechanik verbundenen Schweißbacken;
- Figur 2: in einer Seitenansicht die Doppel-Lineareinheit als vertikal verschiebende Mechanik der Figur 1;
- Figur 3: einen Ausschnitt aus einer Seitenansicht des um 90° in der Horizontalen gedrehten Gegenstandes der Figur 2, mit einem vertikal verschiebbaren Befestigungsteil;
- Figur 4: in einer Draufsicht den Gegenstand der Figur 2;
- Figur 5: in einer Seitenansicht eine horizontal verschiebende Mechanik in Form einer Doppel-Lineareinheit mit umlaufendem Zahnriemen analog Figur 1, jedoch zusätzlich mit Riemenstraffern am Zahnriemengetriebe, zwischen dem Motor und einer Lineareinheit;
- Figur 6: in einer Draufsicht den Gegenstand der Figur 5;
- Figur 7: in einer Seitenansicht ein weiteres Ausführungsbeispiel einer einfachen horizontal verschiebenden Lineareinheit mit zwei von einem Motor direkt gegenläufig über ein Zahnrad angetriebenen Zahnstangen, wobei jeweils eine Zahnstange starr mit dem Befestigungsteil einer Schweißbacke verbunden ist, wobei das Zugmittel ein Doppelzahnriemen ist;
- Figur 8: in einer Seitenansicht eine horizontal verschiebende Doppel-Lineareinheit analog Figur 5, jedoch mit einem in einer Lineareinheit integrierten Motor, und mit gefederten Schweißbacken, die jeweils starr mit einem Befestigungsteil verbunden sind;
- Figur 9: in einer Draufsicht den Gegenstand der Figur 8;
- Figur 10: in einem Koordinatensystem mögliche Bahnen der Schweißbacken, wobei die Bahnen der Schweißbacken parallel zum Folienschlauch durch jeweils mindestens eine gerade Strecke und ansonsten durch eine Ellipsenbahn beschrieben werden;
- Figur 11: in einer Seitenansicht schematisch eine vertikal verschiebende Mechanik mit einer kombinierten Dämpfung nach Kelvin und Maxwell;
- Figur 12: in einer Seitenansicht schematisch eine als Doppelschlauchbeutelmaschine ausgestaltete erfindungsgemäße Schlauchbeutelmaschine;
- Figur 13: in einer Seitenansicht schematisch eine Schweißbacke, sowie starr damit verbunden einen Produktabstreifer und einen Kühlluftauslaß;
- Figur 14: in einer Draufsicht schematisch als weiteres Ausführungsbeispiel für ein Getriebe zur Erzeugung zweier entgegengesetzter Verschieberichtungen ein Getriebe mit zwei Doppelzahnriemen und zwei Zahnstangen;
- Figur 15: in einer Seitenansicht das Getriebe der Figur 14, und in weiteren Ausführungsbeispielen für ein Getriebe zur Erzeugung zweiter entgegengesetzter Verschiebungen schematisch:

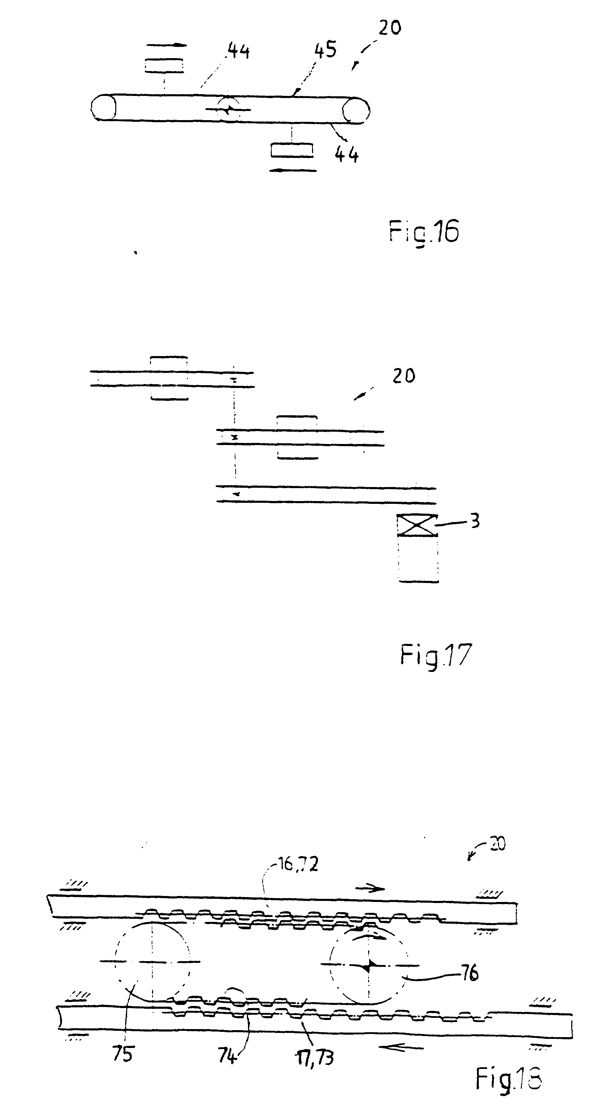

- Figur 16: in einer Draufsicht ein Zahnriemengetriebe;
- Figur 17: in einer Seitenansicht das Zahnriemengetriebe der Figur 22;
- Figur 18: in einer Seitenansicht ein Getriebe mit einem Zahnriemen und zwei Zahnstangen;
- Figur 19: in einer Seitenansicht ein Zugmittelgetriebe;
- Figur 20: in einer Draufsicht das Zugmittelgetriebe der Figur 19;
- Figur 21: ein weiteres Ausführungsbeispiel eines Zugmittelgetriebes mit zwei Lineareinheiten, sowie
- Figur 22: ein weiteres Ausführungsbeispiel eines Zugmittelgetriebes mit einer Lineareinheit.

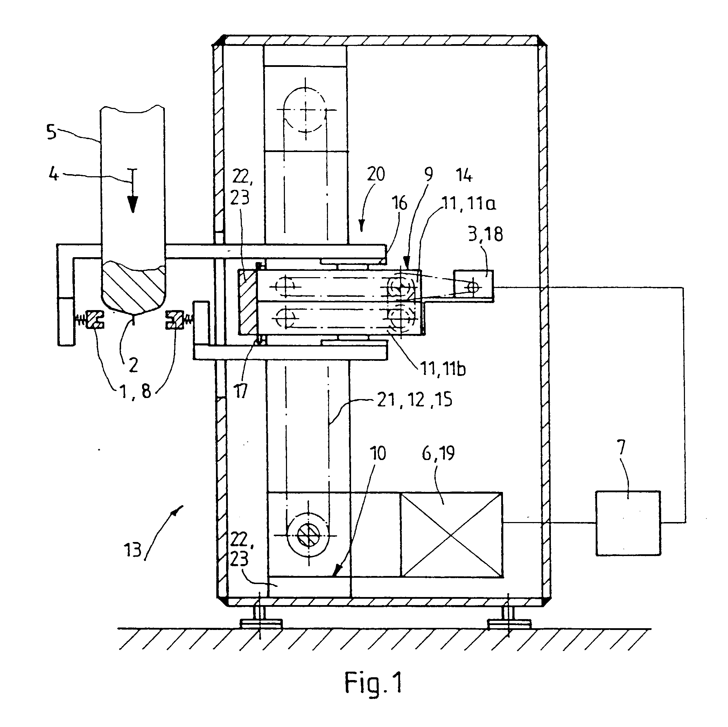

An einer Schlauchbeutelmaschine sind die Einrichtungen 1 zum Verschweißen der Beutelquernähte 2 sowohl mittels eines Motors 3 senkrecht zur Bewegungsrichtung 4 des Schlauches 5 verschiebbar, als auch mittels eines weiteren Motors 6 parallel zur Bewegungsrichtung 4 des Schlauches 5 verschiebbar (Figur 1). Die Motoren 3, 4 werden jeweils separat über eine Rechnereinheit 7 angesteuert.

Die Einrichtungen 1 zum Verschweißen der Beutelquernähte 2 sind Schweißbacken 8. Die Schweißbacken 8 sind über eine senkrecht zur Bewegungsrichtung 4 des Schlauches 5 verschiebende Mechanik 9 verschiebbar mit einer parallel zur Bewegungsrichtung 4 des Schlauches 5 verschiebenden Mechanik 10 verbunden. Die Schlauchbeutelmaschine ist eine vertikale Schlauchbeutelmaschine 13. Die die Schweißbacken 8 horizontal verschiebende Mechanik 9 ist eine vom Motor 3 angetriebene Lineareinheit 11, ebenso ist die die Schweißbacken 8 vertikal verschiebende Mechanik 10 eine vom Motor 6 angetriebene Lineareinheit 12. Beide Lineareinheiten 11, 12 sind als Doppel-Lineareinheiten 14, 15 ausgestaltet, bei der die einzelnen Lineareinheiten 11a, 11b über jeweils ein Befestigungsteil 16, 17 mit den Schweißbacken 8 verbunden sind. Der Motor 3 der horizontal verschiebenden Mechanik 9 ist ebenso wie der Motor 6 der vertikal verschiebenden Mechanik 10 ein Servomotor 18, 19. Die horizontal verschiebende Mechanik 9 enthält ein Getriebe 20, das entgegengesetzte Verschieberichtungen erzeugt, wogegen die vertikal verschiebende Mechanik 10 ein Getriebe 21 enthält, das gleichgerichtete Verschieberichtungen erzeugt.

Die Doppel-Lineareinheit 14 ist über Befestigungsteile 22, 23 vertikal verschiebbar mit der Doppel-Lineareinheit 15 verbunden.

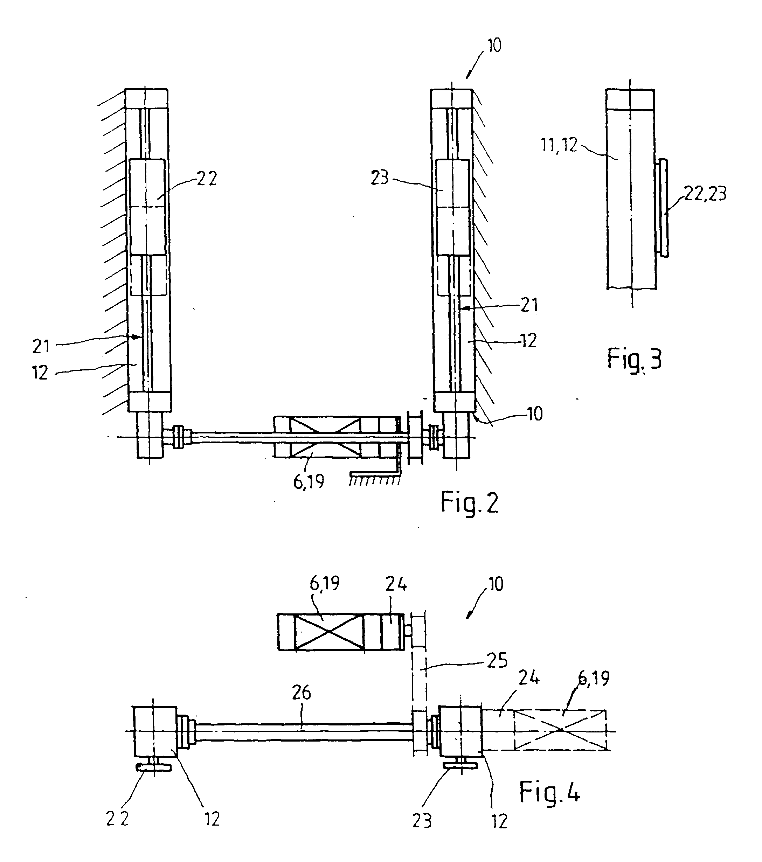

Die vertikal verschiebende Mechanik 10 (Figur 2, Figur 3, Figur 4) wird von dem feststehenden Servomotor 19 über ein Motorgetriebe 24, einen Riemen 25 und einer Welle 26 angetrieben (Figur 4). Die Welle 26 endet zum Beispiel beidseitig in Zahnrädern, die jeweils einen Zahnriemen antreiben, an der ein Befestigungsteil 22, 23 vorgesehen ist.

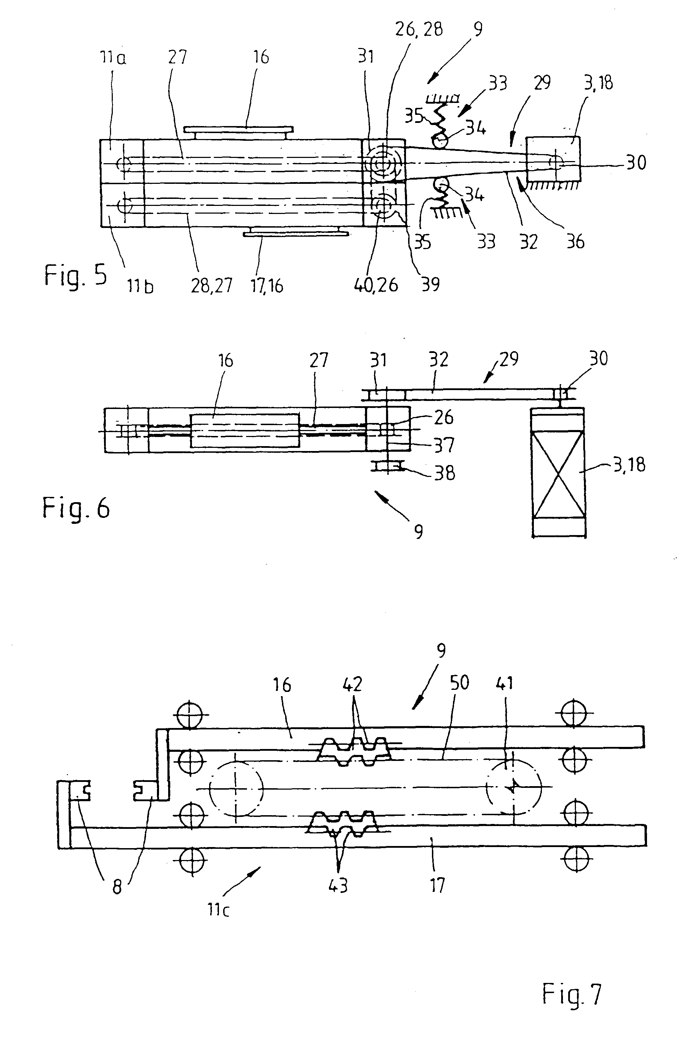

Die horizontal verschiebende Mechanik 9 (Figur 5, Figur 6) enthält pro Lineareinheit 11a, 11b einen vom Servomotor 18 über ein Zahnrad 26 angetriebenen Zahnriemen 27, 28. Jeweils ein Befestigungsteil 16, 17 ist derart mit einem Zahnriemen 27, 28 verbunden, und die Umlaufrichtung der Zahnriemen 27, 28 ist derart, daß die Befestigungsteile 16, 17 von den Zahnriemen 27, 28 gezogen werden.

Der Motor 3 steht fest und treibt mittels eines Zahnriemengetriebes 29 die in vertikaler Richtung beweglichen Lineareinheiten 11a, 11b an. Dabei bilden die Zahnräder 30, 31 eine Untersetzung. Am Zahnriemen 32 des Zahnriemengetriebes 29 ist ein Riemenstraffer 33 vorgesehen. Der Riemenstraffer 33 besteht aus zwei Rädern 34, die jeweils mittels einer Feder 35 gegen den Zahnriemen 32 vorgespannt sind, und die auf der äußeren Riemenfläche 36 gegenüberliegend abrollen.

Der Antrieb der unteren Lineareinheit 11b erfolgt über ein mittels der gleichen Achse 37 wie das Zahnrad 26 angetriebenes Zahnrad 38. Ein Zahnriemen 39 überträgt die Antriebskraft vom Zahnrad 38 auf das Zahnrad 40 der unteren Lineareinheit 11b. Durch diesen Antrieb ist erreicht, daß auf die mit den Zahnriemen 27, 28 verbundenen Befestigungsteile 16, 17 gleichartige, jedoch entgegengesetzt gerichtete Bewegungskomponenten, wie Auslenkung, Geschwindigkeit und Beschleunigung, übertragen werden.

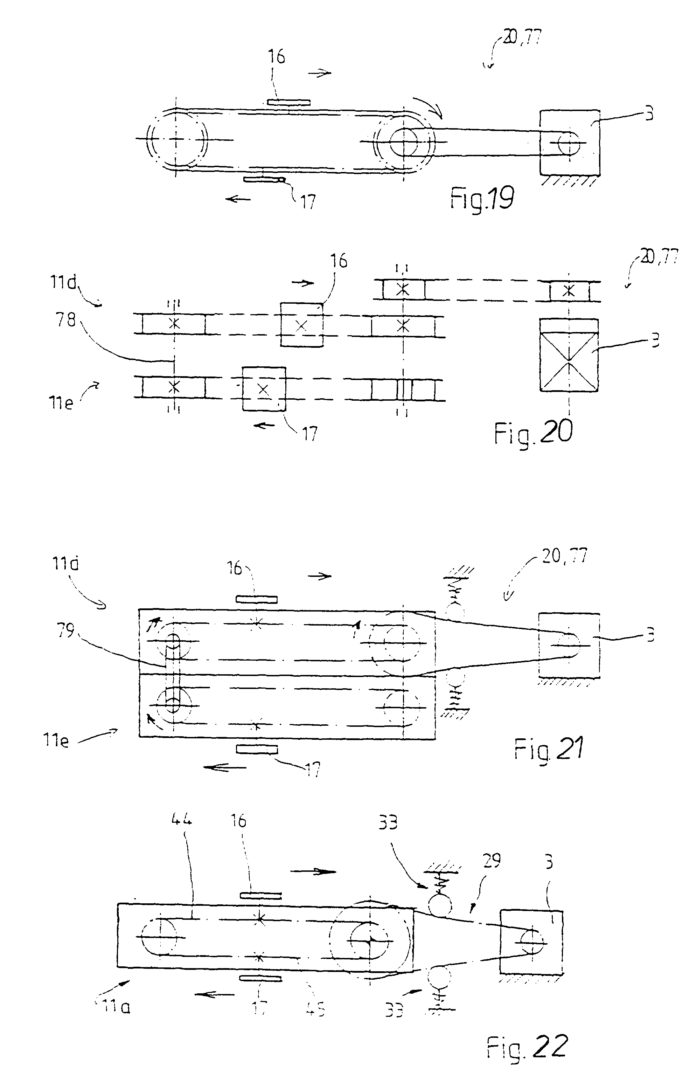

In einem weiteren Ausführungsbeispiel für eine horizontal verschiebende Mechanik 9 ist eine einfache Lineareinheit 11c mit zwei von einem Motor direkt gegenläufig über ein Zahnrad 41 angetriebenen Zahnstangen 42, 43 ausgestaltet (Figur 7). Jeweils eine Zahnstange 42, 43 ist starr mit dem Befestigungsteil 16, 17 einer Schweißbacke 8 verbunden. Analog Figur 22 ist diese gegenläufige Bewegung auch dadurch erreicht, daß an gegenläufig bewegten, geraden Abschnitten (44) eines Zahnriemens (45) bzw. der Zahnriemen jeweils ein Befestigungsteil (16, 17) einer Schweißbacke (8) vorgesehen ist, das über die Zahnstangen (42, 43) mit dem Zahnriemen 45 verbunden ist.

Prinzipiell ist eine große Vielfalt von Getrieben 20 zur Erzeugung von entgegengesetzten Bewegungskomponenten und damit entgegengesetzten Verschieberichtungen einsetzbar.

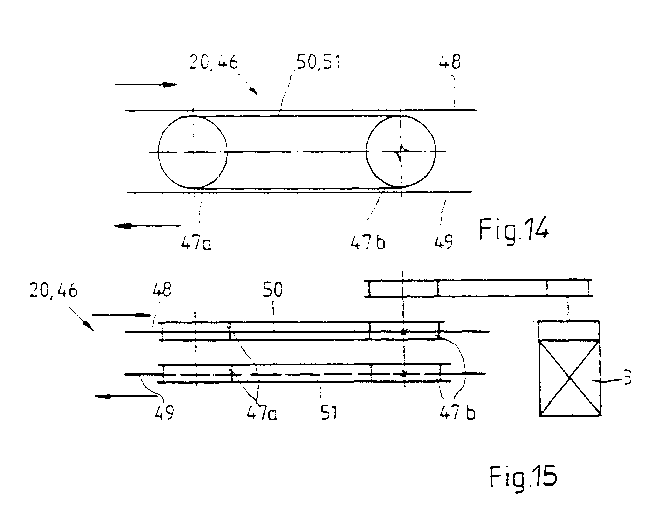

Zwei Zahnstangen 48, 49 werden zum Beispiel von zwei Zahnrädern 47a, 47b angetrieben, die achsparallel zueinander versetzt sind (Figuren 14 und 15). Die Zahnräder 47a, 47b bei der letztgenannten Konstruktion sind Doppelräder, von denen zwei Doppel-Zahnriemen 50, 51 bewegt werden. Dadurch, daß die eine Zahnstange 48 oben auf den Zahnrädern 47a, 47b sitzt und die andere Zahnstange 49 unter den Zahnrädern 47a, 47b liegt, werden die Zahnstangen 48, 49 entgegengesetzt verschoben.

Bei dem Getriebe 20 der Figur 18 handelt es sich um eine Variante zu dem in Figur 7 dargestellten Getriebe. Die Befestigungsteile 16, 17 haben bei dem Getriebe der Figur 18 die Form von Zahnstangen 72, 73, die direkt zu den Schweißbacken führen. Die Zahnstangen 72, 73 werden über einen Zahnriemen 74, der über zwei achsparallel versetzte Zahnräder 75, 76 läuft, angetrieben.

Die Figuren 19, 20 und 21 zeigen zwei weitere Varianten für Zugmittelgetriebe 77. Bei der einen Variante (Figur 19, Figur 20) sind zwei Lineareinheiten 11d, 11e vorgesehen, die über eine Achse 78 miteinander starr verbunden sind und folglich die gleichen Bewegungsparameter aufweisen. Bei der anderen Variante (Figur 21) sind die Lineareinheiten 11d, 11e übereinander angeordnet. Die gleichen Bewegungsparameter werden durch eine Kopplung der beiden Lineareinheiten 11d, 11e mittels eines Zahnriemens 79 erreicht.

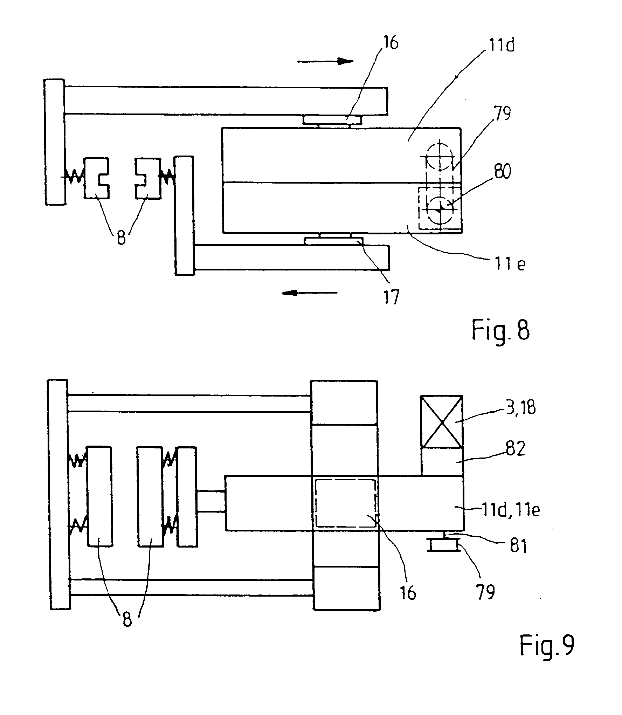

Eine weitere Variante eines Zugmittelgetriebes ist in den Figuren 8 und 9 dargestellt. Hier setzt der die beiden Lineareinheiten 11d, 1 le koppelnde Zahnriemen 79 an einem angetriebenen Zahnrad 80 an. Der Servomotor 18 treibt die Achse 81 über ein Getriebe 82 an. Dieses Getriebe 82 bewirkt eine Reduzierung der Drehzahl.

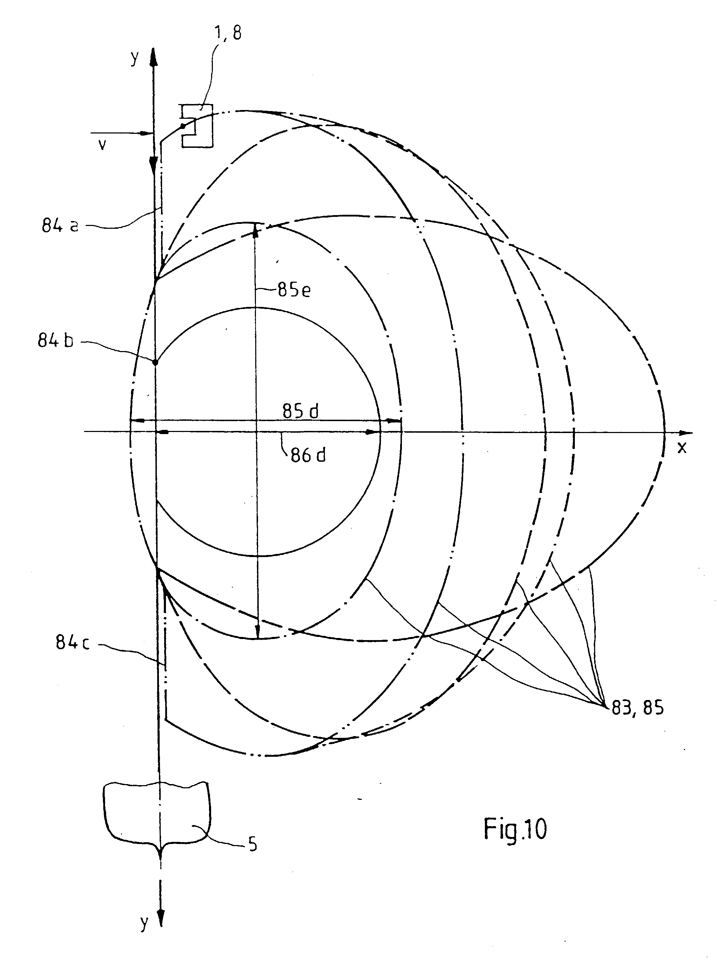

Die Einrichtungen 1 zum Verschweißen der Beutelquernähte 2 werden für eine kontinuierliche Arbeitsweise zum Beispiel auf Bahnen 83 bewegt, die während einer Bewegung am Schlauch 5 zueinander parallelen Geraden 84a, 84b, 84c entsprechen, und die in einer Ellipsenbahn 85 geschlossen sind (Figur 10). Der Ellipsendurchmesser 85d ist in Richtung senkrecht zur Bewegungsrichtung 4 des Schlauches 5 kleiner als der Ellipsendurchmesser 85e in Richtung parallel zur Bewegungsrichtung 4 des Schlauches 5. Die Wegdistanz 86d in der Richtung senkrecht zum Schlauch 5 der Einrichtungen 1 zum Verschweißen der Beutelquemähte 2 wird abhängig von der Dicke der erzeugten Beutel vorgegeben. Unmittelbar vor einem Querschweißvorgang werden bei einer vertikalen Schlauchbeutelmaschine zum Beispiel die Einrichtungen 1 zum Verschweißen der Beutelquernähte 2 parallel zum Folienschlauch 5 und ohne Berührungskontakt zum Schlauch 5 nach unten entlang der Bahn 84a bewegt. Dabei haben sie eine größere Relativgeschwindigkeit als der Schlauch 5. Mittels eines mit der Einrichtung 1 verbundenen Produktabstreifers 87 (Figur 13) wird dabei über den Schlauch 5 gestreift und im Schlauch 5 vorhandenes Schüttgut zusätzlich nach unten bewegt.

Mit der Einrichtung 1 kann eine Nahtkühlung erreicht werden. Dazu werden nach einem Querschweißvorgang die Einrichtungen 1 zum Verschweißen der Beutelquernähte 2 entlang der Bahn 84c parallel zum Schlauch 5 ohne Berührungskontakt zum Schlauch 5 positioniert, wobei sie die gleiche Relativgeschwindigkeit wie der Schlauch 5 haben. In dieser Positionierung wird mittels eines mit der Einrichtung 1 verbundenen Kühlluftauslasses 88 (Figur 13) die Beutelquernaht 2 gekühlt.

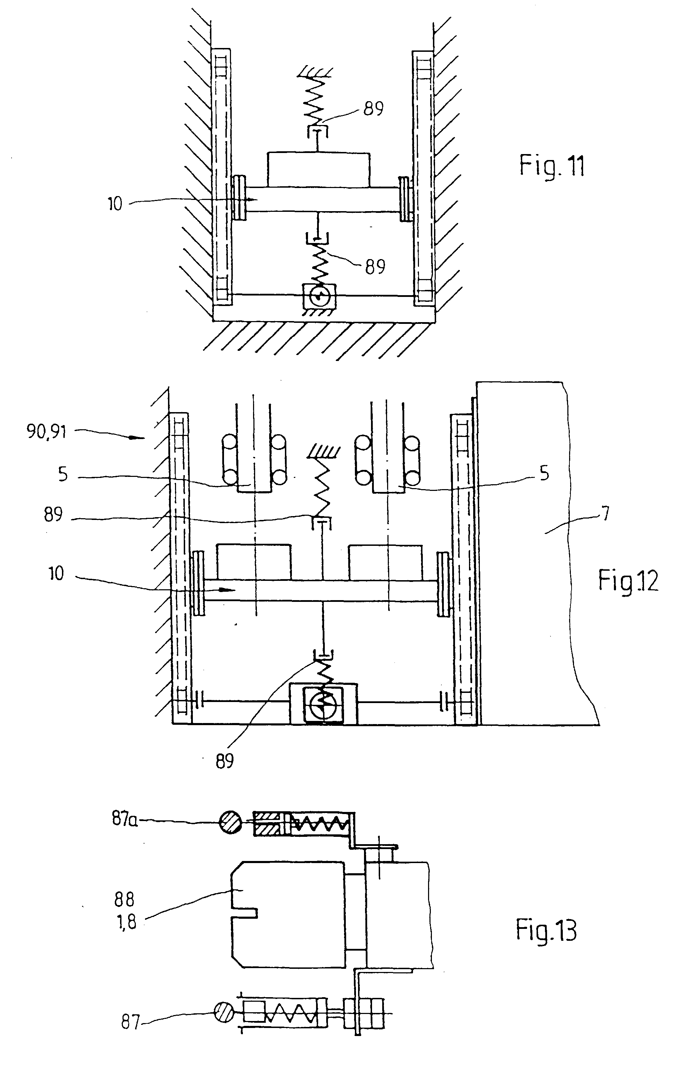

Eine parallel zur Bewegungsrichtung des Schlauches 5 verschiebende Mechanik 10 (Figur 11) kann, genauso wie eine vertikal zur Bewegungsrichtung des Schlauches verschiebende Mechanik 9, in dieser Richtung mittels einer Federung 89 abgefedert werden. Diese Federung 89 ist auch bei einer Schlauchbeutelmaschine 90 realisierbar, die als Doppelschlauchbeutelmaschine 91 ausgestaltet ist (Figur 12).

Bei ausreichender Zugkraft kann auch nur eine senkrechte Lineareinheit eingesetzt werden (Figur 22), diese Variante kann auch mit auf der Lineareinheit befestigtem Getriebemotor ausgestattet werden.

Der Siegeldruck der Querbacken (1, 8) kann durch Federn, pneumatische oder hydraulische Elemente, oder auch durch das Antriebsmoment des Antriebsmotors (3) erzeugt werden.

## Patentansprüche

1. Schlauchbeutelmaschine mit einer Folientransporteinrichtung, einer Folienumformeinrichtung, einer Produkteinfülleinrichtung, mit einer Einrichtung zum Verschweißen der Beutellängsnaht, einer Einrichtung zum Verschweißen der Beutelquernähte (2) in Form von gegenläufig bewegten Schweißbacken (8), sowie einer Einrichtung zum Durchtrennen der Folie, wobei die Einrichtungen (1) zum Verschweißen der Beutelquernähte (2) sowohl mittels eines ersten Motors (3) senkrecht zur Bewegungsrichtung (4) des Schlauches (5) verschiebbar, als auch mittels eines weiteren Motors (6) parallel zur Bewegungsrichtung (4) des Schlauches (5) verschiebbar sind, wobei die Motoren (3, 6) über eine Rechnereinheit (7) jeweils separat angesteuert werden, und wobei die Einrichtungen (1) zum Verschweißen der Beutelquernähte (2) über eine senkrecht zur Bewegungsrichtung (4) des Schlauches (5) verschiebende Mechanik (9) verschiebbar mit einer parallel zur Bewegungsrichtung (4) des Schlauches (5) verschiebenden Mechanik (10) verbunden sind, dadurch gekennzeichnet, daß die die Einrichtungen (1) zum Verschweißen der Beutelquernähte (2) senkrecht zur Bewegungsrichtung (4) des Schlauches (5) verschiebende Mechanik (9) eine mittels des ersten Motors (3) angetriebene Lineareinheit (11) ist, daß die Lineareinheit (11) mindestens einen vom ersten Motor (3) über ein Zahnrad (26) angetriebenen Zahnriemen (27, 28, 45) enthält, daß an gegenläufig bewegten, geraden Abschnitten (44) des Zahnriemens (45) bzw. der Zahnriemen (27, 28) jeweils ein Befestigungsteil (16, 17) einer Schweißbacke (8) vorgesehen ist, und daß der erste Motor (3) ein Servomotor (18) ist.

2. Schlauchbeutelmaschine nach Anspruch 1, dadurch gekennzeichnet, daß die die Einrichtungen (1) zum Verschweißen der Beutelquernähte (2) parallel zur Bewegungsrichtung (4) des Schlauches (5) verschiebende Mechanik (9) eine mittels des weiteren Motors (6) angetriebene Lineareinheit (12) mit umlaufendem Zahnriemen ist.

3. Schlauchbeutelmaschine nach Anspruch 2, dadurch gekennzeichnet, daß der weitere Motor (6) ein Servomotor (19) ist.

4. Schlauchbeutelmaschine nach Anspruch 1, dadurch gekennzeichnet, daß der erste Motor (3) feststeht und mittels eines Zahnriemengetriebes (29) die bewegliche Lineareinheit (11a, 11b) antreibt, oder auch mit der beweglichen Lineareinheit (11a) verbunden ist.

5. Schlauchbeutelmaschine nach Anspruch 4, dadurch gekennzeichnet, daß am Zahnriemen (32) des Zahnriemengetriebes (29) ein Riemenstraffer (33) vorgesehen ist.

6. Schlauchbeutelmaschine nach Anspruch 5, dadurch gekennzeichnet, daß der Riemenstraffer (33) aus zwei Rädern (34) besteht, die jeweils mittels einer Feder (35) gegen den Zahnriemen (32) vorgespannt sind, und die auf der äußeren Riemenfläche (36), gegenüberliegend, abrollen.

7. Schlauchbeutelmaschine nach Anspruch 1, dadurch gekennzeichnet, daß als Lineareinheit (11, 12) eine Doppel-Lineareinheit (14, 15) vorgesehen ist, bei der jede Lineareinheit (11, 12) über jeweils einen Befestigungsteil (16, 17) mit jeweils einer Einrichtung (1) zum Verschweißen der Beutelquernähte (2) mechanisch verbunden ist.

8. Schlauchbeutelmaschine nach Anspruch 1, dadurch gekennzeichnet, daß die senkrecht zur Bewegungsrichtung des Schlauches (5) verschiebende Mechanik in dieser Richtung mittels mindestens einer Feder abgefedert ist, und auch mittels einer Dämpfung abgedämpft ist.

9. Schlauchbeutelmaschine nach Anspruch 1 oder Anspruch 8, dadurch gekennzeichnet, daß die parallel zur Bewegungsrichtung des Schlauches (5) verschiebende Mechanik (10) in dieser Richtung mittels mindestens einer Federung (89) abgefedert ist, und auch mittels mindestens einer Dämpfung abgedämpft ist.

10. Schlauchbeutelmaschine nach Anspruch 8 oder Anspruch 9, dadurch gekennzeichnet, daß die Federung und Dämpfung in der Lineareinheit integriert ist.

11. Schlauchbeutelmaschine nach Anspruch 1, dadurch gekennzeichnet, daß die Schlauchbeutelmaschine (90) eine Doppelrohrschlauchbeutelmaschine (91) ist, als auch eine Mehrfachrohr-Schlauchbeutelmaschine.

12. Schlauchbeutelmaschine nach Anspruch 1, dadurch gekennzeichnet, daß an der Einrichtung (1) zum Verschweißen der Beutelquernähte (2) ein starr mit dieser Einrichtung (1) verbundener Produktabstreifer (87) vorgesehen ist, oder auch ein Luftausdrücker, als auch ein Produktanhalter (87a).

13. Schlauchbeutelmaschine nach Anspruch 1, dadurch gekennzeichnet, daß an der Einrichtung (1) zum Verschweißen der Beutelquernähte (2) ein starr mit dieser Einrichtung (1) verbundener Kühlluftauslaß (88) vorgesehen ist.

14. Schlauchbeutelmaschine nach Anspruch 12 und Anspruch 13, dadurch gekennzeichnet, daß der Kühlluftauslaß in den Produktabstreifer integriert ist.

15. Schlauchbeutelmaschine nach Anspruch 3, dadurch gekennzeichnet, daß die Lineareinheit (11c) zwei vom ersten Motor (3) gegenläufig über ein Zahnrad (41) angetriebene Zahnstangen (42, 43) enthält, und jeweils eine Zahnstange (42, 43) starr mit einem Befestigungsteil (16, 17) verbunden ist, wobei die Kraftübertragung vom Zahnrad auf die Zahnstangen über einen Doppelzahnriemen (5c,74) erfolgt.

## Claims

1. A bag-forming machine with a foil-conveying device, a foil-shaping device, a product-filling device, with a device for welding the longitudinal seam of the bag, a device for welding the transverse seams (2) of the bag in the form of welding jaws (8) moved in opposite directions, and a device for severing the foil, wherein the devices (1) for welding the transverse seams (2) of the bag are displaceable by means of a first motor (3) at a right angle to the direction of movement (4) of the tube (5) and are displaceable by means of a further motor (6) parallel to the direction of movement (4) of the tube (5), wherein the motors (3, 6) are each controlled separately by way of a computer unit (7), and wherein the devices (1) for welding the transverse seams (2) of the bag are displaceable by way of a mechanism (9) moving at a right angle to the direction of movement (4) of the tube (5) and are connected to a mechanism (10) moving parallel to the direction of movement (4) of the tube (5), **characterized in that** the mechanism (9) moving the devices (1) for welding the transverse seams (2) of the bag at a right angle to the direction of movement (4) of the tube (5) is a linear unit (11) driven by means of the first motor (3), the linear unit (11) contains at least one toothed belt (27, 28, 45) driven by the first motor (3) by way of a toothed wheel (26), one respective fastening part (16, 17) of a welding jaw (8) is provided on straight portions (44) - moved in opposite directions - of the toothed belt (45) or of the toothed belts (27, 28), and the first motor (3) is a servomotor (18).

2. A bag-forming machine according to Claim 1, **characterized in that** the mechanism (10) moving the devices (1) for welding the transverse seams (2) of the bag parallel to the direction of movement (4) of the tube (5) is a linear unit (12) - driven by means of the further motor (6) - with a circulating toothed belt.

3. A bag-forming machine according to Claim 2, **characterized in that** the further motor (6) is a servomotor (19).

4. A bag-forming machine according to Claim 1, **characterized in that** the first motor (3) is stationary and drives the movable linear unit (11a, 11b) by means of a toothed-belt drive (29), or is connected to the movable linear unit (11a).

5. A bag-forming machine according to Claim 4, **characterized in that** a belt-tensioning means (33) is provided on the toothed belt (32) of the toothed-belt drive (29).

6. A bag-forming machine according to Claim 5, **characterized in that** the belt-tensioning means (33) comprises two wheels (34) which are each pre-stressed against the toothed belt (32) by means of a spring (35) and which roll over the outer belt face (36) in an opposed manner.

7. A bag-forming machine according to Claim 1, **characterized in that** the linear unit (11, 12) provided is in the form of a double-linear unit (14, 15) in which each linear unit (11, 12) is connected mechanically to one respective device (1) for welding the transverse seams (2) of the bag by way of one respective fastening part (16, 17) in each case.

8. A bag-forming machine according to Claim 1, **characterized in that** the mechanism moving at a right angle to the direction of movement of the tube (5) is sprung in this direction by means of at least one spring and is also damped by means of a damping means.

9. A bag-forming machine according to Claim 1 or Claim 8, **characterized in that** the mechanism (10) moving parallel to the direction of movement of the tube (5) is sprung in this direction by means of at least one spring (89) and is also damped by means of at least one damping means.

10. A bag-forming machine according to Claim 8 or Claim 9, **characterized in that** the springing and damping are integrated in the linear unit.

11. A bag-forming machine according to Claim 1, **characterized in that** the bag-forming machine (90) is a double-tube bag-forming machine (91) and also a multiple-tube bag-forming machine.

12. A bag-forming machine according to Claim 1, **characterized in that** a product brushing-off means (87) rigidly connected to the device (1) for welding the transverse seams (2) of the bag, or an air-expelling means, or a product-stopping means (87a) is provided on the said device (1) for welding the transverse seams (2) of the bag.

13. A bag-forming machine according to Claim 1, **characterized in that** a cooling-air outlet (88) rigidly connected to the device (1) for welding the transverse seams (2) of the bag is provided on the said device (1) for welding the transverse seams (2) of the bag.

14. A bag-forming machine according to Claim 12 and Claim 13, **characterized in that** the cooling-air outlet is integrated in the product brushing-off means.

15. A bag-forming machine according to Claim 3, **characterized in that** the linear unit (11c) contains two toothed racks (42, 43) driven in opposite directions by the first motor (3) by way of a toothed wheel (41), and each toothed rack (42, 43) is rigidly connected to a fastening part (16, 17), wherein the transmission of force from the toothed wheel to the toothed racks takes place by way of a double-toothed belt (5c, 74).

## Revendications

1. Machine à produire des sachets en tuyau comportant un dispositif de transport de feuille, un dispositif de transformation de feuilles, un dispositif de remplissage avec des produits, un dispositif de soudage du cordon longitudinal du sachet (2) sous forme de mâchoires de soudage mobiles en sens contraire (8), ainsi qu'un dispositif (1) pour séparer la feuille, les dispositifs (1) de soudage des cordons transversaux des sachets (2) pouvant être déplacés, aussi bien perpendiculairement à la direction du mouvement (4) du tuyau (5) au moyen d'un premier moteur (3), que parallèlement à la direction du mouvement (4) du tuyau (5) au moyen d'un autre moteur (6), ces moteurs (3, 6) pouvant être commandés séparément par une unité de calculateur (7) et les dispositifs (1) de soudage des cordons transversaux des sachets (2) étant reliés, par un système mécanique (9) mobile perpendiculairement à la direction du mouvement (4) du tuyau (5), avec un système mécanique (10) mobile parallèlement à la direction du mouvement (4) du tuyau (5), caractérisée en ce que le système mécanique (9) déplaçant les dispositifs (1) de soudage des cordons transversaux des sachets (2) perpendiculairement à la direction du mouvement (4) du tuyau (5) est une unité linéaire (11) entraînée par le premier moteur (3), que l'unité linéaire (11) comporte au moins une courroie crantée (27, 28, 45) entraînée par un pignon (26) au moyen du premier moteur (3), qu'il est prévu chaque fois une pièce de fixation (16, 17) d'une mâchoire de soudage (8) sur les sections (44) droites, déplacées en sens opposé, de la courroie crantée (45) ou de la courroie crantée (27, 28), et en ce que le premier moteur (3) est un servomoteur.

2. Machine à produire des sachets selon la revendication 1, caractérisée en ce que le système mécanique (9) déplaçant les dispositifs (1) de soudage des cordons transversaux des sachets (2) parallèlement à la direction du mouvement (4) du tuyau (5), est une unité linéaire entraînée par l'autre moteur (6) avec une courroie crantée qui l'entoure.

3. Machine à produire des sachets selon la revendication 2, caractérisée en ce que l'autre moteur (6) est un servomoteur.

4. Machine à produire des sachets selon la revendication 1, caractérisée en ce que le premier moteur (6) est fixe et entraîne l'unité linéaire mobile (11a, 11b) par un entraînement à courroie crantée (29) ou est aussi relié à l'unité linéaire mobile 11a).

5. Machine à produire des sachets selon la revendication 4, caractérisée en ce qu'un tendeur de courroie (33) est prévu sur la courroie crantée (29) de entraînement à courroie crantée (32).

6. Machine à produire des sachets selon la revendication 4, caractérisée en ce que le tendeur de courroie (33) est constitué de deux roues (34) qui chacune sont précontraintes contre la courroie crantée (32) par un ressort (35) et qui roulent en face l'une de l'autre sur la surface externe (36) de la courroie.

7. Machine à produire des sachets selon la revendication 1, caractérisée en ce qu'il est prévu une unité linéaire double (14, 15) en tant qu'unités linéaires (11, 12), dans laquelle chacune des unités linéaires (11, 12) est reliée par une pièce de fixation propre (16, 17) à l'un des dispositifs (1) de soudage respectif des cordons de soudure transversaux des sachets (2).

8. Machine à produire des sachets selon la revendication 1, caractérisée en ce que le système mécanique effectuant le déplacement perpendiculairement à la direction du mouvement (4) du tuyau (5) est suspendu avec au moins un ressort et aussi amorti grâce à un amortisseur.

9. Machine à produire des sachets selon la revendication 1 ou la revendication 8, caractérisée en ce que le système mécanique effectuant le déplacement parallèlement à la direction du mouvement (4) du tuyau (5) est suspendu avec au moins un ressort et aussi amorti grâce à un amortisseur.

10. Machine à produire des sachets selon la revendication 8 ou la revendication 9, caractérisée en ce que la suspension et l'amortisseur sont intégrés à l'unité linéaire.

11. Machine à produire des sachets selon la revendication 1, caractérisée en ce que la machine à produire des sachets (90) est aussi bien une machine à produire des sachets à double tube (91) qu'une machine à plusieurs tubes.

12. Machine à produire des sachets selon la revendication 1, caractérisée en ce qu'il est prévu sur la machine (1) à produire des sachets (2), rigidement fixé sur elle, un dévêtisseur de produit (87) ou un éjecteur à air ou aussi un bloqueur de produit (87a).

13. Machine à produire des sachets selon la revendication 1, caractérisée en ce qu'il est prévu, rigidement fixé sur la machine (1) à produire des sachets (2), une sortie d'air de refroidissement (88).

14. Machine à produire des sachets selon la revendication 8 ou la revendication 9, caractérisée en ce que la sortie d'air de refroidissement (88) est intégrée au dévêtisseur de produit.

15. Machine à produire des sachets selon la revendication 3, caractérisée en ce que l'unité linéaire (11c) comporte deux crémaillères (42, 43) entraînées en sens opposés par le premier moteur (3) au moyen d'un pignon (41) et que chaque crémaillère (42, 43) est reliée rigidement à une pièce de fixation (16, 17), la transmission des forces du pignon aux crémaillères étant effectuée par une double courroie crantée (50, 74).
